# EUROPEAN PATENT SPECIFICATION

(11) **EP 2 237 982 B1**
(45) Date of publication and mention of the grant of the patent: **07.11.2012**
(21) Application number: 08862864.9
(22) Date of filing: 17.12.2008
(51) Int. Cl.: B60K 6/26, B60K 6/365, B60K 6/445, B60K 6/448

(54) **DRIVE SYSTEM FOR A HYBRID VEHICLE**
ANTRIEBSSYSTEM FÜR EIN HYBRIDFAHRZEUG
SYSTÈME D'ENTRAÎNEMENT POUR UN VÉHICULE HYBRIDE

(30) Priority: 18.12.2007 EP 07076100
(43) Date of publication of application: 13.10.2010
(73) Proprietor: Nederlandse Organisatie voor Toegepast -Natuurwetenschappelijk Onderzoek TNO, 2628 VK Delft (NL)
(72) Inventor: FOSTER, Darren Leigh, NL-5622 CH Eindhoven (NL)
(74) Representative: Jansen, Cornelis Marinus
(86) International application number: PCT/NL2008/050809
(87) International publication number: WO 2009/078715

(56) References cited:
- EP-A- 1 746 714
- WO-A-03/075437
- US-A1- 2004 043 856
- US-A1- 2004 198 551
- US-B1- 6 405 818

## Description

The invention relates to a drive system, in particular to a drive system for a hybrid vehicle, provided with an engine and an electric machine. The engine and the electric machine are power sources that each have different characteristics and of which the driving power is used to run the vehicle in a combination that is optimal for the conditions.

In recent years hybrid vehicles have been developed and put into practical use. In such a hybrid vehicle, strengths of each power source are used to compensate for weaknesses of the other power source by using the driving power from the two types of power sources in a combination that is optimal for the driving conditions. As a result, the power performance of the vehicle is sufficiently ensured and the fuel consumption rate and emission performance are largely improved.

Various proposals have been made for the drive systems to be used in hybrid vehicles. One proposal includes the use of a combustion engine of which the output shaft is coupled to a power split device, e.g. a planetary gear that splits the torque of the engine into two drive paths. A first path includes a mechanical path that transmits mechanical power only. A second path includes two electric machines. Between these electrical machines, this path transmits electrical power only. The two drive paths are mechanically coupled downstream of the electrical machines, e. g. using a mechanical reduction device. The coupled paths go to the final drive. A first one of the electric machines functions as a generator, and a second one of the electric machines functions as a motor or vice versa. The motor and the generator are coupled via inverters. The inverter are coupled to the battery.

US 2004/198551 discloses a hybrid vehicle comprising a power split device in accordance with the preamble of claim 1 with associated drive paths, wherein at least one of the drive paths comprises two mechanically coupled electric machines that provide an electrical drive path.

Presently, an impediment to extensive market penetration is the relatively high costs of such hybrid drive systems, forming an investment barrier and reduced margins for the manufacturer. Two major costs components in such a hybrid system are the electric machines, especially the inverter component and the battery component. In particular, if the electrical power transmitted trough the second path is high, relatively large inverters are necessary, and high stresses are placed on the cooling system for the electric parts. In practice, to keep costs down, the transmission ratio range is limited, restricting vehicle performance at low vehicles speed. In particular, low speed drive torque is negatively affected, which limits trailer tow ability.

The invention aims to lessen the above disadvantages. Thereto, the invention provides for a drive system, according to claim 1

By using mechanically coupled, preferably mechanically integrated, electric machines forming a cascaded power split, significant cost reduction on the electric machine side can be achieved. In particular, because the coupled electric machines form a cascaded power split, a mechanical drive path is available to transmit power within the drive path with the electrical machines. This way, installed electric power and inverter rating can be significantly reduced. Further, due to integration of the electric machines, system mass, volume and complexity can be reduced.

By using a dual air gap machine as mechanically coupled electric machines, a compact yet relatively simple mechanically integrated design can be used. Preferably, the dual air gap machine comprises a rotor, an interrotor and a stator that together form two mechanically integrated electric machines. Examples of such machines are disclosed in US5917248, WO 0034066, EP1154551A2, WO03051660 and in Longya Xu, "A new breed of electric machines- basic analysis and applications of dual mechanical port electric machines," Proc. 8th Int. Conf. Electrical Machines and Systems, Nanjing, 2005, pp. 24-29. The mechanically coupled electric machines may be used as an electric variator, i.e. as a unit that enforces a given speed difference across the input and output shaft of the drive path with the electrical machines.

Advantageously, the two electric machines are mechanically and magnetically coupled, and are preferably part of an electric variable transmission such as for example disclosed by applicant in WO 03/075437. Such a machine can e.g. be characterized as an electric variable transmission comprising an electromechanical converter provided with a primary shaft having a rotor mounted thereon, a secondary shaft having an interrotor mounted thereon, and a stator, fixedly mounted to the housing of the electromechanical converter wherein, viewed from the primary shaft in radial direction, the rotor, the interrotor and the stator are arranged concentrically relative to each other, and wherein the rotor and the stator are designed with one or more mono- or polyphase, electrically accessible windings, wherein the interrotor forms one whole both mechanically and electromagnetically, and is arranged as an conductor for the magnetic flux in tangential and radial direction, and wherein the pattern of magnetic poles in the magnetic flux conducting material on at least one side of the interrotor is free and can be varied during operation.

The power split device in the drive system can be an input split type, an output split type, a compound split type or combinations of the above.Preferably, the power split device is an output split device that is arranged to combine two power paths at the transmission output. Another option is the input split type, wherein the power split occurs at the input side of the transmission. Yet another option is the compound split configuration, where the power is split at the transmission input and again combined by a second power split device at the transmission output. The power split device may comprise a planetary gear, but may also comprise a hydraulic torque converter of suitable configuration.

The invention also relates to a hybrid vehicle, comprising a drive system in any of the variants described above, as well as to the use of a dual air gap electric machine, in particular an electric variable transmission, in a drive path of a drive system with a power split device. The invention further relates to a method for transmission of power in a drive system, wherein the drive power is split into drive paths, and wherein the power in one of the drive paths is split again using two mechanically coupled, in particular mechanically integrated, and preferably also electromagnetically coupled electric machines. This way, the split path can be subdivided into both an electric and a mechanical drive path, thereby reducing the power requirements for the components in the electric drive path.

Other features and aspects of the invention will be apparent from the following example, which is given as a non-limiting preferred embodiment only. In the drawings,
Fig. 1 shows a block diagram of a drive system incorporating an electric variable transmission;
Fig. 2 shows a block diagram of the transmission of Fig. 1 represented as a cascaded power split;
Fig. 3 shows a block diagram of another embodiment of a drive system incorporating an electric variable transmission;
Fig. 4 shows a block diagram of the transmission of Fig. 5 represented as a cascaded power split;
Fig. 5 shows a schematic representation of an electric variable transmission;
Fig. 6 shows a graph comparing power split characteristics;
Fig. 7 shows a graph denoting power split ratio versus transmission ratio for a drive system including an electric variable transmission;
Fig. 8 shows a table comparing machine torques for different drive systems.

The drawings are only schematic representations of preferred, exemplary embodiments of the invention. Further, it is noted that similar or corresponding parts are denoted using the same reference numerals.

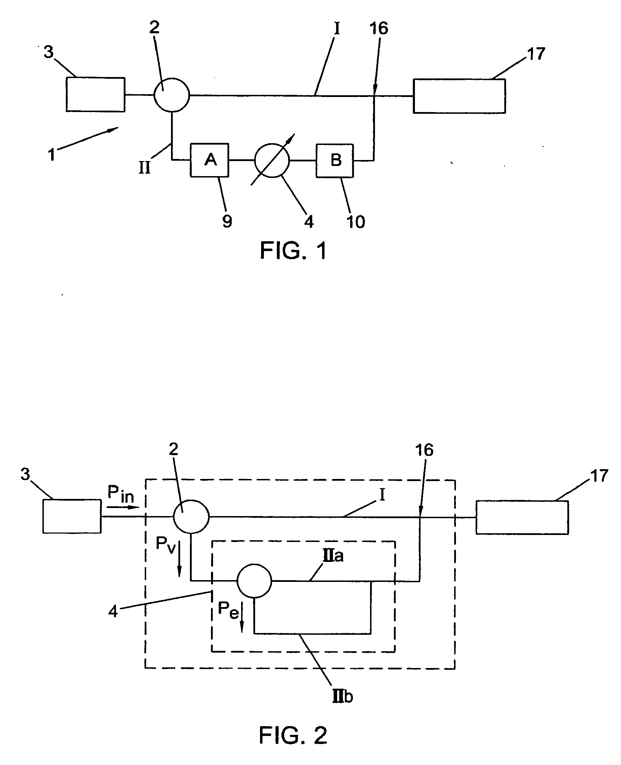

Fig. 1 shows a drive system 1 for a hybrid vehicle. The hybrid vehicle may e.g. be an automobile that combines two motive power sources, such as an internal combustion engine and an electric motor. The drive system 1 comprises a power split device 2. In this embodiment, the power split device is embodied as a planetary gear system.

The power split device 2 is here embodied as an input split device that is arranged to split input power. In such an input split configuration, the transmission paths are split at the transmission entrance and are coupled at the transmission output.

The input power for the power split device 2 here is generated by a combustion engine 3. Such a combustion engine may e.g. be an internal combustion engine, such as a Diesel motor or an Otto motor. The power split device 2 splits the torque generated by the engine into two drive paths that meet each other at a junction point 16 before a differential 17. [. A first path I that is shown in the top of the drawing transmits mechanical power only. A second path II, which is shown below the first path in the drawings, comprises two integrated, mechanically and preferably also magnetically coupled electric machines 4. The electric machines 4 form a cascaded power split having both a mechanical and an electrical drive path. This is illustrated in fig. 2. The second path II includes a mechanical sub path IIa and an electrical sub path IIb in parallel.

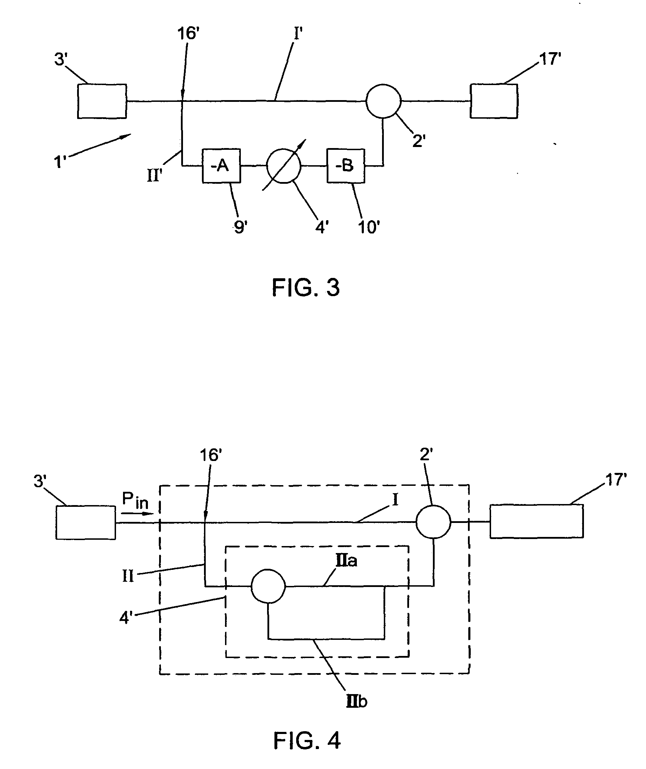

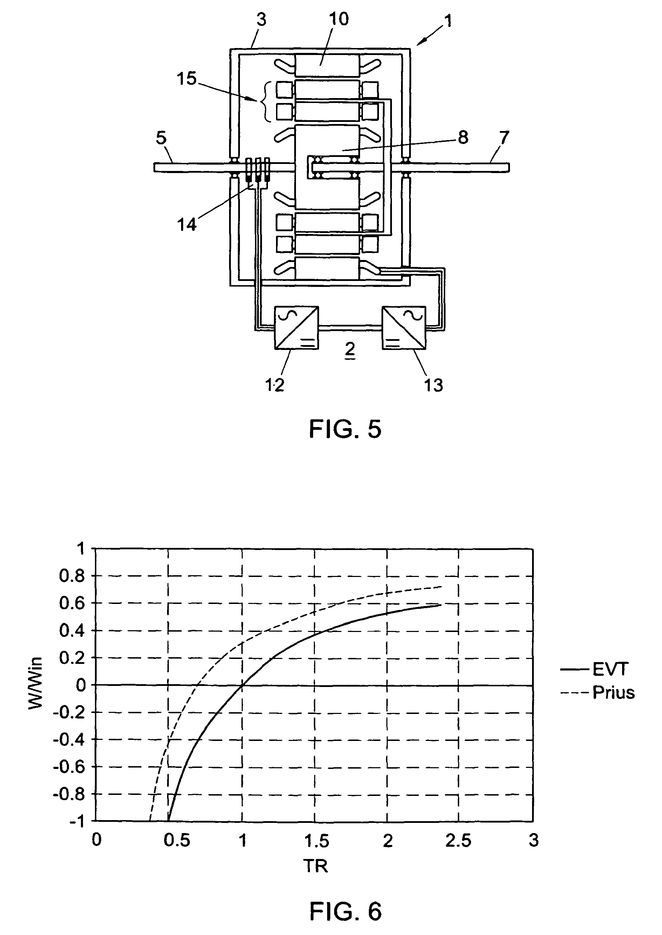

In this example, two mechanically and magnetically coupled electrical machines are provided that are part of an electric variable transmission (E.V.T.). Such an electric variable transmission is described in detail in WO 03/075437 in the name of applicant. In particular, with reference to fig. 5, such an electric variable transmission comprises an electromechanical converter, provided with a primary shaft 5 having a rotor 8 mounted thereon, a secondary shaft 7 having an interrotor 15 mounted thereon, and a stator 10A fixedly mounted to the housing 3 of the electromechanical converter. Viewed from the primary shaft 5 in radial direction, the rotor 8, the interrotor 15 and the stator 10A are arranged concentrically relative to each other. The rotor 8 and the stator 10A may be designed with one or more mono- or polyphase electrically accessible windings. The interrotor 15 forms one whole both mechanically and electromagnetically, and is arranged as a conductor for the magnetic flux in tangential and radial direction. The pattern of magnetic poles in the magnetic flux conducting material on at least one side of the interrotor is free, and can be varied during operation. For more details on the electric variable transmission reference is made to WO 03/075437, in particular to the description of the exemplary embodiment shown in fig. 3 of WO'437.

The primary shaft 5 may for example be coupled to split device 2, e.g. via a gear transmission having a fixed ratio. The secondary shaft 7 may for example be coupled to a drive shaft forming the mechanical path I at junction point 16, e.g. via a gear transmission 10 having a fixed ratio.

Fig. 3 shows an alternative embodiment of the drive system 1', in which the power split device 2' is embodied as an output split device that is arranged to split output power. In this embodiment, the transmission paths I' and II' are joined at the transmission entrance via a junction point 16', and are split at the transmission output via a power split device 2 at the transmission output. In fig. 4 it is illustrated that also in this embodiment, the electric machines 4' form a cascaded power split having both a mechanical and a electrical drive path. The second path II' includes a mechanical sub path IIa' and an electrical sub path IIb' in parallel.

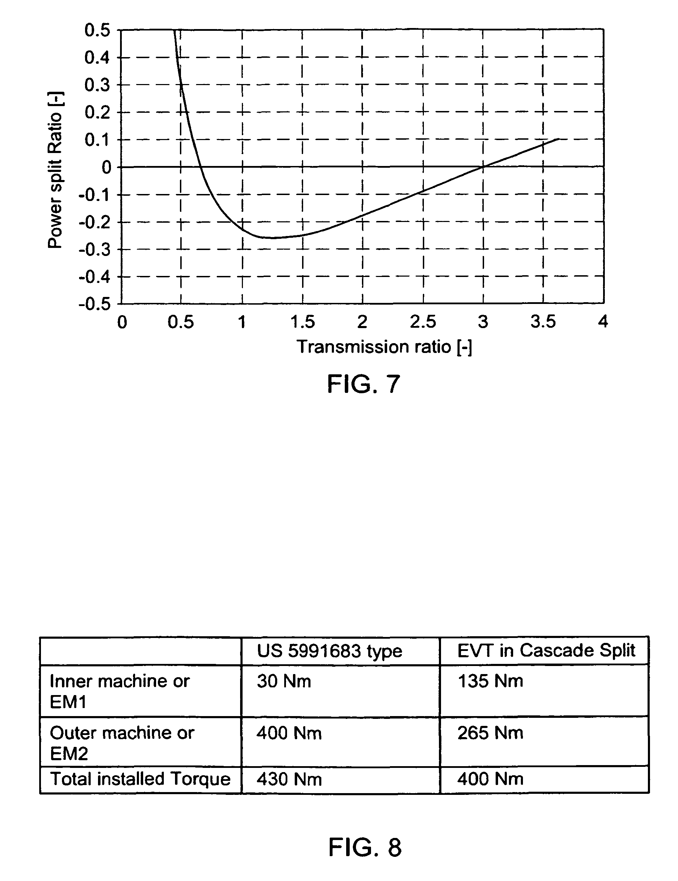

Figure 6 of the present application shows a graph is which the power split characteristic for a drive system with input split in a conventional drive system for a hybrid vehicle, e.g. as disclosed in US 5 991 683, is compared to a drive system according to the invention that comprises an electric variable transmission (E.V.T.). In the graph, transmission ratio TR (output torque / input torque) is denoted on the horizontal axis, while W/win (electrical split power / input shaft power) is denoted on the vertical axis. The system as disclosed in US'683 and E.V.T. have a similar characteristic, but points of zero mechanical split power are at different locations. By providing the drive path II that comprises the two mechanically integrated and magnetically coupled electric machines with a mechanical transmission, here a gear transmission having a fixed transmission ratio 9, 10 at respectively the input and output of the coupled machines, the points of zero electrical split power may be moved relative to each other. By correct "tuning" in this fashion, the characteristic as shown in figure 7 may be achieved. As can be readily seen from the figure, the required split power for a given ratio range is significantly reduced. In the graph of figure 7, the transmission ratio is denoted on the horizontal axis, while the power split ratio is denoted on the vertical axis.

In the table of figure 8, an overview for machine torques is given that is needed for equivalent performance to a conventional hybrid transmission The table shows the required "air gap torques" for the inner and outer airgap for an E.V.T. configuration, and the torques required for each electric machine a system of the type of US'683. In both cases the transmission input torque and the transmission output torque are the same. With electric machines of a given type and characteristic, the torque rating is proportional to machine physical size. The E.V.T. in cascade powersplit has reduced requirements for the volume of the electric machines compared with the system of US'683, as can be seen by the total installed torque figure. This leads to a much more compact package. The transmission may be controlled by controlling the electric variable transmission. In general use, the input shaft of the electric variable transmission is speed controlled. This controls the input shaft speed of the transmission, which is generally connected to an engine. The output is torque controlled. In the control of the electric variable transmission, many options are possible, such as regenerative breaking, engine start en stop, boost charge etc.

It shall be clear to the skilled person that the invention is not limited to the embodiments described herein. Many variations are possible within the scope of the invention as defined in the appended claims.

## Claims

1. Drive system (1), in particular for a hybrid vehicle, comprising a power split device (2) with associated drive paths (I, II), wherein at least one of the drive paths (I, II) comprises two mechanically and magnetically coupled electric machines (4) that form a cascaded power split having both a mechanical drive path (IIa) wherein the two electric machines are magnetically coupled and an electrical drive path (IIb) that transmits electrical power only.

2. Drive system (1) according to claim 1, wherein the mechanically coupled electric machines (4) comprise a dual air gap machine.

3. Drive system (1) according to claim 2, wherein the dual air gap machine comprises a rotor (8), an interrotor (15) and a stator (10A) that together form two mechanically integrated electric machines.

4. Drive system (1) according to any of claims 1-3, wherein the two electrically and magnetically coupled electric machines are part of an electric variable transmission.

5. Drive system (1) according to any of claims 1-4, wherein the electric variable transmission comprises an electromechanical converter provided with a primary shaft (5) having a rotor (8) mounted thereon, a secondary shaft (7) having an interrotor (15) mounted thereon, and a stator (10A), fixedly mounted to the housing (3) of the electromechanical converter, wherein, viewed from the primary shaft (5) in radial direction, the rotor (8), the interrotor (15) and the stator (10A) are arranged concentrically relative to each other, and wherein the rotor (8) and the stator (10A) are designed with one or more mono- or polyphase, electrically accessible windings, wherein the interrotor (15) forms one whole both mechanically and electromagnetically, and is arranged as a conductor for the magnetic flux in tangential and radial direction, and wherein the pattern of magnetic poles in the magnetic flux conducting material on at least one side of the interrotor is free and can be varied during operation.

6. Drive system (1) according to any of the preceding claims, wherein the power split device comprises a planetary gear.

7. Drive system (1) according to any of the preceding claims, wherein the power split device is an output split device that is arranged to split output power.

8. Drive system (1) according to any of the preceding claims, wherein the input power is generated is by a combustion engine.

9. Drive system according to any of the preceding claims, wherein a further drive path associated with the power split device is a mechanical drive path that transmits mechanical power only.

10. Drive system (1) according any of the preceding claims, wherein said drive path comprising the two mechanically coupled electric machines (4) includes a mechanical transmission, preferably a gear transmission having a fixed transmission ratio, at the input and/or output of the magnetically coupled electric machines.

11. Hybrid vehicle, comprising a drive system (1) according to any of the preceding claims.

12. Method for transmission of power in a drive system (1), wherein the drive power is split into drive paths (I, II), and wherein the power in one of the drive paths is split again using two mechanically and magnetically coupled electric machines (4), in particular dual air gap electric machines.

13. Use of a dual air gap electric machine, in particular an electric variable transmission, in a drive path of a drive system with a power split device.

## Patentansprüche

1. Antriebssystem (1), insbesondere für ein Hybridfahrzeug, umfassend eine Leistungsverzweigungsvorrichtung (2) mit zugehörigen Antriebswegen (I, II), wobei mindestens einer der Antriebswege (I, II) zwei mechanisch und magnetisch gekoppelte Elektromaschinen (4) umfasst, die eine stufenförmige Leistungsverzweigung bilden, sowohl mit einem mechanischen Antriebsweg (IIa), wobei die zwei Elektromaschinen magnetisch gekoppelt sind, als auch mit einem elektrischen Antriebsweg (IIb), der nur elektrische Leistung überträgt.

2. Antriebssystem (1) nach Anspruch 1, wobei die mechanisch gekoppelten Elektromaschinen (4) eine duale Luftspaltmaschine umfassen.

3. Antriebssystem (1) nach Anspruch 2, wobei die duale Luftspaltmaschine einen Rotor (8), einen Interrotor (15) und einen Stator (10A) umfasst, die zusammen zwei mechanisch integrierte Elektromaschinen bilden.

4. Antriebssystem (1) nach einem der Ansprüche 1-3, wobei die zwei elektrisch und mechanisch gekoppelten Elektromaschinen Teil eines elektrischen variablen Getriebes sind.

5. Antriebssystem (1) nach einem der Ansprüche 1-4, wobei das elektrische variable Getriebe einen elektromechanischen Wandler umfasst, der mit einer primären Welle (5), an der ein Rotor (8) angebracht ist, einer sekundären Welle (7), an der ein Interrotor (15) angebracht ist, und einem Stator (10A), der fest am Gehäuse (3) des elektromechanischen Wandlers angebracht ist, versehen ist, wobei aus Sicht von der primären Welle (5) in radialer Richtung, der Rotor (8), der Interrotor (15) und der Stator (10A) konzentrisch zueinander angeordnet sind, und wobei der Rotor (8) und der Stator (10A) mit einer oder mehreren Mono- oder Polyphasen, elektrisch zugänglichen Windungen ausgelegt sind, wobei der Interrotor (15) ein mechanisches und elektromagnetisches Ganzes bildet und als Leiter für den Magnetfluss in tangentialer und radialer Richtung angeordnet ist, und wobei das Muster der magnetischen Pole in dem den Magnetfluss leitenden Material auf mindestens einer Seite des Interrotors frei ist und während des Betriebs variiert werden kann.

6. Antriebssystem (1) nach einem der vorhergehenden Ansprüche, wobei die Leistungsverzweigungsvorrichtung ein Planetengetriebe umfasst.

7. Antriebssystem (1) nach einem der vorhergehenden Ansprüche, wobei die Leistungsverzweigungsvorrichtung eine Ausgangsverzweigungsvorrichtung ist, die dazu angeordnet ist, die Ausgangsleistung zu verzweigen.

8. Antriebssystem (1) nach einem der vorhergehenden Ansprüche, wobei die Eingangsleistung durch einen Verbrennungsmotor erzeugt wird.

9. Antriebssystem nach einem der vorhergehenden Ansprüche, wobei ein weiterer, mit der Leistungsverzweigungsvorrichtung verbundener Antriebsweg, ein mechanischer Antriebsweg ist, der nur mechanische Leistung überträgt.

10. Antriebssystem (1) nach einem der vorhergehenden Ansprüche, wobei der Antriebsweg, der die zwei mechanisch gekoppelten Elektromaschinen (4) umfasst, ein mechanisches Getriebe, vorzugsweise ein Zahnradgetriebe mit einem festen Übersetzungsverhältnis, am Eingang und/oder Ausgang der magnetisch gekoppelten Elektromaschinen einschließt.

11. Hybridfahrzeug, umfassend ein Antriebssystem (1) nach einem der vorhergehenden Ansprüche;

12. Verfahren zur Übertragung der Leistung in einem Antriebssystem (1), wobei die Antriebsleistung verzweigt ist in Antriebswege (I, II) und wobei die Leistung in einem der Antriebswege unter Verwendung von zwei mechanisch und magnetisch gekoppelten Elektromaschinen (4), insbesondere dualen Luftspalt-Elektromaschinen, erneut verzweigt ist.

13. Verwendung einer dualen Luftspalt-Elektromaschine, insbesondere eines elektrischen variablen Getriebes, in einem Antriebsweg eines Antriebssystems mit einer Leistungsverzweigungsvorrichtung.

## Revendications

1. Système d'entraînement (1), en particulier destiné à un véhicule hybride, comprenant un dispositif répartiteur de puissance (2) avec des circuits de transmission associés (I, II), dans lequel l'un au moins des circuits de transmission (I, II) comprend deux machines électriques couplées mécaniquement et magnétiquement (4) qui forment un répartiteur de puissance en cascade ayant à la fois un circuit de transmission mécanique (IIa) dans lequel les deux machines électriques sont couplées magnétiquement et un circuit de transmission électrique (IIb) qui transmet uniquement de la puissance électrique.

2. Système d'entraînement (1) selon la revendication 1, dans lequel les machines électriques couplées mécaniquement (4) comprennent une machine à double entrefer.

3. Système d'entraînement (1) selon la revendication 2, dans lequel la machine à double entrefer comprend un rotor (8), un rotor intermédiaire (15) et un stator (10A) qui ensemble forment deux machines électriques mécaniquement intégrées.

4. Système d'entraînement (1) selon l'une quelconque des revendications 1 à 3, dans lequel les deux machines électriques couplées électriquement et magnétiquement font partie d'une transmission électrique variable.

5. Système d'entraînement (1) selon l'une quelconque des revendications 1 à 4, dans lequel la transmission électrique variable comprend un convertisseur électromécanique muni d'un arbre primaire (5) sur lequel un rotor (8) est monté, un arbre secondaire (7) sur lequel un rotor intermédiaire (15) est monté, et un stator (10A) monté de manière fixe sur le boîtier (3) du convertisseur électromécanique, dans lequel, vus depuis l'arbre primaire (5) dans le sens radial, le rotor (8), le rotor intermédiaire (15) et le stator (10A) sont disposés concentriquement les uns par rapport aux autres et dans lequel le rotor (8) et le stator (10A) sont conçus avec un ou plusieurs enroulements mono- ou polyphasés électriquement accessibles, dans lequel le rotor intermédiaire (15) forme un ensemble tant du point de vue mécanique qu'électromagnétique et est adapté pour conduire le flux magnétique dans le sens tangentiel et radial, et dans lequel le motif de pôles magnétiques dans le matériau conduisant le flux magnétique sur un côté au moins du rotor intermédiaire est libre et peut être modifié en cours de fonctionnement.

6. Système d'entraînement (1) selon l'une quelconque des revendications précédentes, dans lequel le dispositif répartiteur de puissance comprend un engrenage planétaire.

7. Système d'entraînement (1) selon l'une quelconque des revendications précédentes, dans lequel le dispositif répartiteur de puissance est un dispositif répartiteur de sortie adapté pour répartir la puissance de sortie.

8. Système d'entraînement (1) selon l'une quelconque des revendications précédentes, dans lequel la puissance d'entrée est générée par un moteur à combustion interne.

9. Système d'entraînement selon l'une quelconque des revendications précédentes, dans lequel un autre circuit de transmission associée au dispositif répartiteur de puissance est un circuit de transmission mécanique qui transmet uniquement de la puissance mécanique.

10. Système d'entraînement (1) selon l'une quelconque des revendications précédentes, dans lequel ledit circuit de transmission comprenant les deux machines électriques couplées mécaniquement (4) comprend une transmission mécanique, de préférence une transmission à engrenage ayant un rapport de transmission fixe, à l'entrée et/ou à la sortie des machines électriques couplées magnétiquement.

11. Véhicule hybride, comprenant un système d'entraînement (1) selon l'une quelconque des revendications précédentes.

12. Procédé de transmission de puissance dans un système d'entraînement (1), dans lequel la puissance d'entraînement est répartie entre des circuits de transmission (I, II) et dans lequel la puissance dans un des circuits de transmission est à nouveau répartie en utilisant deux machines électriques couplées mécaniquement et magnétiquement (4), en particulier des machines électriques à double entrefer.

13. Utilisation d'une machine électrique à double entrefer, en particulier d'une transmission électrique variable, dans un circuit de transmission d'un système d'entraînement comprenant un dispositif répartiteur de puissance.
